# EUROPÄISCHE PATENTSCHRIFT

(11) **EP 3 352 141 B1**
(45) Veröffentlichungstag und Bekanntmachung des Hinweises auf die Patenterteilung: **16.07.2025**
(21) Anmeldenummer: 18151991.9
(22) Anmeldetag: 17.01.2018
(51) Int. Cl.: G07C 5/08, G07C 5/00

(54) **VERFAHREN ZUR IDENTIFIKATION EINER ANBAUVORRICHTUNG**
METHOD FOR IDENTIFICATION OF AN ADD-ON DEVICE
PROCÉDÉ D'IDENTIFICATION D'UN DISPOSITIF DE MONTAGE

(30) Priorität: 23.01.2017 DE 102017201040
(43) Veröffentlichungstag der Anmeldung: 25.07.2018
(73) Patentinhaber: Deere & Company, Moline, IL 61265 (US)
(72) Erfinder: Gresch, Valentin, 68163 Mannheim (DE)
(74) Vertreter: Dehnhardt, Florian Christopher

(56) Entgegenhaltungen:
- EP-A1- 2 889 166
- DE-A1- 102012 017 451
- DE-A1- 4 328 145
- ALDO CALCANTE ET AL: "Design, development and evaluation of a wireless system for the automatic identification of implements", COMPUTERS AND ELECTRONICS IN AGRICULTURE, vol. 101, 1 February 2014 (2014-02-01), AMSTERDAM, NL, pages 118 - 127, XP055482354, ISSN: 0168-1699, DOI: 10.1016/j.compag.2013.12.010
- MARVIN L STONE ET AL: "ISO 11783: AN ELECTRONIC COMMUNICATIONS PROTOCOL FOR AGRICULTURAL EQUIPMENT", 7 February 1999 (1999-02-07), pages 3 - 17, XP002541127, Retrieved from the Internet <URL:http://asae.frymulti.com/data/pdf/6/ddp2002/lecture23.pdf> [retrieved on 19990210]
- NIKKILA R ET AL: "Software architecture for farm management information systems in precision agriculture", COMPUTERS AND ELECTRONICS IN AGRICULTURE, ELSEVIER, AMSTERDAM, NL, vol. 70, no. 2, 1 March 2010 (2010-03-01), pages 328 - 336, XP026857995, ISSN: 0168-1699, [retrieved on 20091105]

## Beschreibung

Die Erfindung betrifft ein Verfahren zur Erfassung und/oder Dokumentation des Betriebs einer mit einem Arbeitsfahrzeug koppelbaren Anbauvorrichtung.

Arbeitsfahrzeuge, insbesondere landwirtschaftliche Arbeitsfahrzeuge, werden oftmals mit sogenannten Anbauvorrichtungen (z.B. Anbaugerät oder Anbaugewicht) gekoppelt, um spezifische Arbeiten, beispielsweise Feldarbeiten, durchzuführen. Dabei kann eine Erkennung und/oder Dokumentation des Betriebs des Arbeitsfahrzeugs und der Anbauvorrichtung erwünscht sein.

Aus DE 10 2014 202 181 A1 ist ein Verfahren und eine Einrichtung zur Analyse und/oder Dokumentation des Betriebs eines landwirtschaftlichen Arbeitsfahrzeugs bekannt. Hierbei wird eine Aussage über den Arbeitszustand (z.B. Straßentransport oder Feldarbeit) der Kombination aus dem Arbeitsfahrzeug und dem gegebenenfalls damit gekoppelten Anbaugerät getroffen.

Des Weiteren ist in der DE 10 2012 017 451 A1 eine Telemetrievorrichtung offenbart, die dazu dient, Zustandswerte eines aus einer Triebmaschine sowie einem Anbaugerät bestehenden landwirtschaftlichen Arbeitszugs zu ermitteln. Unter Zustandswerten in diesem Sinne werden beliebige gemessene oder berechnete Ist- oder Sollwerte verstanden, insbesondere gemessene physikalische Größen, geografische Positionen, Schaltzustände, laufende Zähler und dergleichen, aber auch nicht-physikalische Daten wie Namen, Seriennummern und Versionsnummern. Hierbei weist die Telemetrievorrichtung eine Übertragungseinheit zum Empfang von Zustandswerten von dem Arbeitszug sowie eine Teleeinheit zum drahtlosen Senden von Teledatensätzen an einen Telemetrieserver auf, der an einem zentralen Ort betrieben wird. Die Telemetrievorrichtung umfasst ihrerseits eine Verarbeitungseinheit zum Erzeugen der Teledatensätze aus den empfangenen Zustandswerten.

In der Publikation "Design, development and evaluation of a wireless system for the automatic identification of implements" von ALDO CALCANTE ET AL, veröffentlicht in COMPUTERS AND ELECTRONICS IN AGRICULTURE, AMSTERDAM, NL, (20140201), vol. 101, doi:10.1016/j.compag.2013.12.010, ISSN 0168-1699, Seiten 118 - 127 wird ferner eine Vorrichtung zur drahtlosen Identifikation eines an einem landwirtschaftlichen Traktor angebrachten Anbaugeräts vorgeschlagen, mit dem Ziel, eine damit ausgeführte Arbeitsfunktion zu überwachen und zur Aktualisierung des Datenstands eines Farmmanagementsystems heranzuziehen.

Der Erfindung liegt die Aufgabe zugrunde, ein Verfahren der eingangs genannten Art anzugeben, das eine eindeutige Dokumentation und Übersicht über sämtliche Anbauvorrichtungen eines Betriebes oder Fuhrparks unterstützt.

Diese Aufgabe wird durch ein Verfahren zur Erfassung und/oder Dokumentation des Betriebs einer mit einem Arbeitsfahrzeug koppelbaren Anbauvorrichtung mit den Merkmalen des unabhängigen Patentanspruchs 1 gelöst.

Das Verfahren gemäß Anspruch 1 dient einer Erfassung und/oder Dokumentation des Betriebs einer mit einem Arbeitsfahrzeug koppelbaren Anbauvorrichtung. Dabei wird für jede Anbauvorrichtung von einer Telematik-Einheit des Arbeitsfahrzeugs bei einer erstmaligen Kopplung der Anbauvorrichtung eine Identifikations-Kodierung als Bestandteil einer in der Telematik-Einheit generierten und an eine externe Datenzentrale gesendeten Identifikations-Information (ID-Info) zugeordnet. Die Identifikations-Kodierung ist für jede an das Arbeitsfahrzeug gekoppelte Anbauvorrichtung unterschiedlich, wobei von der Telematik-Einheit beim Entkoppeln der Anbauvorrichtung ein von der Identifikations-Information beinhalteter, die Anbauvorrichtung repräsentierender Betriebsparameter in Gestalt einer aus einer aktuellen Position des Arbeitsfahrzeugs abgeleiteten Position der Anbauvorrichtung als aktueller Stellplatz der Anbauvorrichtung erfasst und die sich daraus ergebende Identifikations-Information über eine mit der Telematik-Einheit verbundene Mobilfunkantenne zur Dokumentation an die externe Datenzentrale gesendet wird.

Da die Identifikations-Information mindestens eine Identifikations-Kodierung beinhaltet, welche für jede an das Arbeitsfahrzeug gekoppelte Anbauvorrichtung unterschiedlich ist, ist jede Anbauvorrichtung eindeutig identifizierbar.

Die Position der Anbauvorrichtung kann auf der Basis aktueller Positions-Koordinaten des Arbeitsfahrzeugs definiert werden, wobei diese Positions-Koordinaten vorzugsweise mittels einer Empfangseinheit des Arbeitsfahrzeugs zum Empfangen von Signalen eines Positionsbestimmungssystems (z.B. GPS, Glonass, Galileo) als Daten bereitgestellt werden.

Da die Identifikations-Information der Anbauvorrichtung deren aktuelle Abstellposition bzw. ihren aktuellen Stellplatz beinhaltet, wird eine eindeutige Dokumentation und Übersicht über sämtliche Anbauvorrichtungen eines Betriebes oder Fuhrparks unterstützt. Auch ist es mit der erfassten aktuellen Abstellposition mehrerer Anbauvorrichtungen möglich, einen Nutzer, insbesondere Fahrer des Arbeitsfahrzeugs, mittels eines Navigationssystems direkt zu einer verfügbaren und für den abzuarbeitenden Arbeitsauftrag passenden Anbauvorrichtung zu leiten.

Vorzugsweise bilden die Identifikations-Kodierung und weitere spezifische, der jeweiligen Anbauvorrichtung zugeordnete Daten gemeinsam die Identifikations-Information. Auf diese Weise kann mit geringem technischen und wirtschaftlichen Aufwand auch bei größeren landwirtschaftlichen Betrieben und einer entsprechend großen Anzahl von Arbeitsfahrzeugen und Anbauvorrichtungen ein Überblick und eine Dokumentation über sämtliche Anbauvorrichtungen sowie deren Betrieb, insbesondere deren aktuelle Position und/oder aktueller Betriebszustand, bereitgestellt werden.

Das Arbeitsfahrzeug ist vorzugsweise ein landwirtschaftliches Fahrzeug, insbesondere ein Traktor bzw. Schlepper. Die am Arbeitsfahrzeug koppelbare Anbauvorrichtung ist vorzugsweise als ein Anbaugerät (z.B. für die Bodenbearbeitung, Sämaschine, Ballenpresse, Mähgerät, Frontlader, Transportanhänger) oder als ein Anbaugewicht (zum Ballastieren des Arbeitsfahrzeugs) ausgebildet. Die Kopplung der Anbauvorrichtung an das Arbeitsfahrzeug erfolgt vorzugsweise über eine Kupplung (insbesondere Dreipunkt-Kraftheber), welche an einer Tragstruktur des Arbeitsfahrzeugs angeordnet ist.

Wie bereits erwähnt, enthält die Identifikations-Information vorzugsweise weitere Daten, welche der jeweiligen Anbauvorrichtung zugeordnet sind. Diese weiteren Daten unterstützen eine geeignete Charakterisierung der vorhandenen Anbauvorrichtungen und erleichtern somit eine übersichtliche Dokumentation über die Anbauvorrichtungen.

In einer bevorzugten Ausführungsform beinhaltet die Identifikations-Information als weitere Daten eine Masse bzw. Gewichtskraft der Anbauvorrichtung. Dabei wird die Masse bzw. Gewichtskraft ohne technischen Mehraufwand ermittelt, da diese Daten aufgrund einer als Kraftheber-Waage wirksamen Anordnung (z.B. Kraftheber und zugeordnete Sensormittel) am Arbeitsfahrzeug ohnehin ermittelt werden und beispielsweise an einem elektronischen Bus des Arbeitsfahrzeugs standardmäßig zur Verfügung stehen.

In einer weiteren bevorzugten Ausführungsform beinhaltet die Identifikations-Information als weitere Daten eine Kennung (z.B. Kenn-Nummer) einer RFID-Einheit (z.B. passiver RFID-Transponder), welche an der Anbauvorrichtung angeordnet ist. Diese RFID-Einheit korrespondiert mit einem RFID-Lesegerät, welches an dem Arbeitsfahrzeug angeordnet ist. Vorzugsweise sind ein oder mehrere RFID-Lesegeräte im Bereich des Front- und/oder Heckkrafthebers des Arbeitsfahrzeugs angeordnet. Die Daten der RFID-Lesegeräte können dann an einem elektronischen Bus des Arbeitsfahrzeugs zur Verfügung gestellt werden.

Vorzugsweise enthält die Identifikations-Information als weitere Daten bzw. als charakteristischen Parameter der Anbauvorrichtung deren Schwerpunkt-Koordinaten relativ zu einem geeigneten Bezugspunkt am Arbeitsfahrzeug.

Weiter bevorzugt beinhaltet die Identifikations-Information mindestens einen die jeweilige Anbauvorrichtung charakterisierenden oder repräsentierenden weiteren Betriebsparameter. Der mindestens eine Betriebsparameter enthält insbesondere einen aktuellen Betriebszustand der jeweiligen Anbauvorrichtung.

Beispielsweise kann die Anbauvorrichtung den Betriebszustand "Angehoben" oder "Abgestellt" haben. Dies ist davon abhängig, ob die Anbauvorrichtung mit dem Arbeitsfahrzeug gekoppelt ist (Zustand "Angehoben") oder nicht (Zustand "Abgestellt"). Diese Unterscheidung kann vorteilhaft ohne zusätzlichen technischen Aufwand mittels einer ohnehin am Arbeitsfahrzeug vorhandenen Kraftheber-Waage erkannt bzw. registriert werden, indem verschiedene Daten von Sensoren der Kraftheber-Waage ausgewertet werden.

Vorzugsweise wird der vorgenannte Betriebszustand "Angehoben" der Anbauvorrichtung noch spezifischer definiert, indem diesem Betriebszustand eine Zustandsvariante zugeordnet wird. Diese Zustandsvariante wird als eine Zustandsklassifizierung des Arbeitsfahrzeugs ermittelt, so dass keine zusätzlichen technischen Mittel an der Anbauvorrichtung erforderlich sind, um den Betriebszustand der Anbauvorrichtung zu analysieren bzw. zu erkennen. Für die Zustandsklassifizierung sind insbesondere mindestens folgende Zustände vorgesehen: "im Stillstand", "in Transportfahrt", "im Feldeinsatz".

Somit können ohne zusätzlichen technischen Aufwand an der Anbauvorrichtung selbst mindestens folgende unterschiedliche Betriebszustände für die Anbauvorrichtung erkannt und entsprechend dokumentiert werden:
"Abgestellt", "Angehoben - im Stillstand", "Angehoben - in Transportfahrt" , "Angehoben - im Feldeinsatz".

Vorzugsweise ist als geeigneter Betriebsparameter eine am Arbeitsfahrzeug gekoppelte Anbauposition der Anbauvorrichtung vorgesehen. Diese Anbauposition ist wiederum ohne zusätzlichen technischen Aufwand mittels einer ohnehin am Arbeitsfahrzeug vorhandenen Kraftheber-Waage ermittelbar, indem verschiedene Daten von Sensoren der Kraftheber-Waage ausgewertet werden. Auf diese Weise kann technisch einfach erkannt und dokumentiert werden, ob die Anbauvorrichtung beispielsweise frontseitig oder heckseitig am Arbeitsfahrzeug angebaut ist, ohne dass hierzu die Anbauvorrichtung selbst kostenaufwändig mit zusätzlichen technischen Mitteln ausgerüstet werden muss.

Vorzugsweise ist als die Anbauvorrichtung charakterisierender Betriebsparameter eine Fahrzeug-Information vorgesehen, deren Daten ein oder mehrere Arbeitsfahrzeuge repräsentieren. Auf diese Weise kann die Fahrzeug-Information Auskunft geben über das Arbeitsfahrzeug, an das die Anbauvorrichtung aktuell gekoppelt ist und/oder über Arbeitsfahrzeuge, an welche die Anbauvorrichtung in der Vergangenheit gekoppelt war. Zur Generierung der Fahrzeug-Information kann wiederum auf jegliche technische Ausrüstung an der Anbauvorrichtung selbst verzichtet werden. Vielmehr kann auf Daten zurückgegriffen werden, die in der elektronischen Ausrüstung des Arbeitsfahrzeugs (z.B. elektronischer Bus) zur Verfügung stehen. Sobald die Anbauvorrichtung mit einem Arbeitsfahrzeug gekoppelt wird, kann der Betriebsparameter "Fahrzeug-Information" fahrzeug-spezifische Daten des aktuellen Arbeitsfahrzeugs aufnehmen. Insbesondere wird mit diesem Betriebsparameter das jeweils aktuell gekoppelte Arbeitsfahrzeug registriert, so dass im Laufe des Betriebs der Anbauvorrichtung auch eine Historie der mit dieser Anbauvorrichtung kombinierten Arbeitsfahrzeuge aufgezeichnet und dokumentiert werden kann.

In einer weiteren bevorzugten Ausführungsform ist als Betriebsparameter der Anbauvorrichtung eine zeitliche Nutzungsdauer der Anbauvorrichtung vorgesehen. Hierdurch kann eine Nutzungsdauer der Anbauvorrichtung in unterschiedlichen Betriebszuständen erkannt und/oder dokumentiert werden.

Insgesamt gesehen können mittels der vorstehend erläuterten Identifikations-Information Betriebszustände und Positionsangaben bezüglich einer Anbauvorrichtung analysiert, dokumentiert und abgefragt werden, ohne dass es hierzu einer spezifischen technischen Ausrüstung (z.B. Steuergerät, Telematik-Einheit) der Anbauvorrichtung selbst bedarf. Vielmehr wird überwiegend oder vollständig auf Daten zurückgegriffen, welche am Arbeitsfahrzeug generiert oder dort standardmäßig (z.B. an einer Telematik-Einheit oder an einem elektronischen Bus des Arbeitsfahrzeugs) zur Verfügung stehen. Hierdurch bleibt der technische und wirtschaftliche Aufwand zur Erfassung und/oder Dokumentation des Betriebs einer beliebigen Anbauvorrichtung gering. Somit können technisch einfach auch solche Anbauvorrichtungen hinsichtlich ihres Betriebs analysiert und/oder dokumentiert werden, welche ohne elektrische Steuergeräte oder Telematik-Einheiten betrieben werden, z.B. Bodenbearbeitungsgeräte oder Anbaugewichte.

Die Erfindung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine Seitenansicht eines als landwirtschaftlicher Schlepper ausgebildeten Arbeitsfahrzeugs, und
- Fig. 2: eine schematische Darstellung von Komponenten zur Erfassung und Dokumentation des Betriebs einer Anbauvorrichtung.

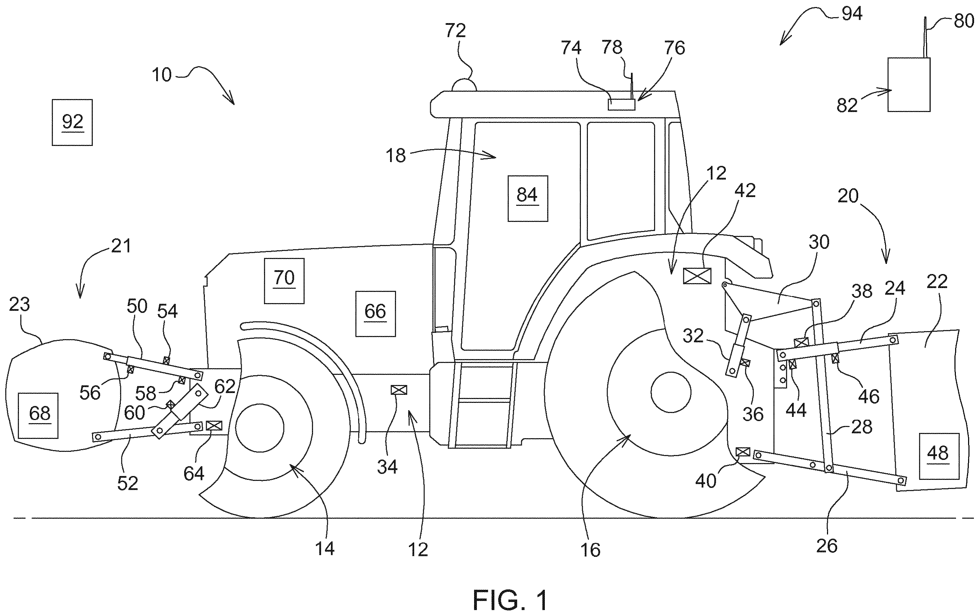

Fig. 1 zeigt ein Arbeitsfahrzeug 10 in Form eines landwirtschaftlichen Schleppers. Es weist eine Tragstruktur 12, Vorderräder 14 und Hinterräder 16 auf. In einer Kabine 18 befindet sich ein Bedienerarbeitsplatz.

An den Heckbereich des Arbeitsfahrzeugs 10 ist ein Dreipunkt-Kraftheber 20 angebracht. Der Dreipunkt-Kraftheber 20 dient zum Heben bzw. Tragen eines beliebigen, schematisch und nur teilweise dargestellten Anbaugerätes 22. Der Dreipunkt-Kraftheber 20 umfasst einen hydraulischen Oberlenker 24, der im heckseitigen Bereich der Tragstruktur 12 gelenkig befestigt ist. Weiterhin umfasst der Dreipunkt-Kraftheber 20 zwei nebeneinander angeordnete Unterlenker 26, welche ebenfalls am heckseitigen Bereich der Tragstruktur 12 gelenkig befestigt sind. Vorzugsweise ist jeder Unterlenker 26 über ein Hubelement 28 (z.B. Hubspindel) mit einem Ende eines Hubarmes 30 verbunden, der gelenkig mit der Tragstruktur 12 des Arbeitsfahrzeugs 10 verbunden ist. Der Hubarm 30 ist über einen gegen die Tragstruktur 12 abgestützten hydraulischen Hubzylinder 32 gegenüber der Tragstruktur 12 schwenkbar.

In Fig. 1 sind am Nutzfahrzeug 10 schematisch und nicht maßstabsgetreu mehrere Sensormittel vorgesehen, welche der Messung bzw. Aufnahme verschiedener physikalischer Grö-ßen, insbesondere an einzelnen Bestandteilen des Heck-Krafthebers 20 und eines Front-Krafthebers 21, dienen. Aus den Sensordaten kann u.a. eine Gewichtskraft bzw. Masse m des heckseitigen Anbaugerätes 22 oder eines frontseitigen Anbaugerätes 23 bestimmt werden. Ein Kraftheber und/oder zugeordnete Sensormittel sind als Kraftheber-Waage wirksam.

Sensormittel 34 sind als ein fahrzeugfest angeordneter Inertial- oder Beschleunigungssensor (alternativ Neigungs- oder Drehratensensor) ausgebildet. Mittels eines Drucksensors 36 wird der hydraulische Druck am Hubzylinder 32 gemessen. Mittels eines Inertial- oder Neigungssensors 38 wird ein Oberlenker-Winkel zwischen dem Oberlenker 24 und einer in Längsrichtung des Arbeitsfahrzeugs 10 verlaufenden Fahrzeug-Horizontalen ermittelt. Ein Zugkraftsensor 40 misst eine Zugkraft am Unterlenker 26. Ein Sensor 42 ermittelt die Hubhöhe und damit eine Position des Heck-Krafthebers 20. Drucksensoren 44, 46 ermitteln den hydraulischen Druck des Oberlenkers 24. Am Anbaugerät 22 ist optional ein Steuergerät 48 angeordnet, welches Informationen über die sogenannte Masthöhe des Heck-Krafthebers 20 bereitstellen kann.

Der Front-Kraftheber 21 weist wiederum einen hydraulischen Oberlenker 50 und zwei nebeneinander angeordnete Unterlenker 52 auf. Sie sind einerseits jeweils an der Tragstruktur 12 angelenkt und andererseits mit dem Anbaugerät 23 verbunden. Das Anbaugerät 23 ist zwar in Fig. 1 als ein Anbaugewicht ausgebildet, kann aber auch eine beliebige andere Ausführungsform aufweisen.

Mittels eines Inertialsensors 54 wird ein Oberlenker-Winkel zwischen dem Oberlenker 50 und einer in Längsrichtung des Arbeitsfahrzeugs 10 verlaufenden Fahrzeug-Horizontalen ermittelt. Mittels Drucksensoren 56, 58 wird der hydraulische Druck des Oberlenkers 50 ermittelt. Ein Drucksensor 60 ermittelt den hydraulischen Druck eines gegen die Tragstruktur 12 abgestützten hydraulischen Hubzylinders 62, der gleichzeitig an einem Unterlenker 50 angelenkt ist. Ein Sensor 64 ermittelt eine Position, insbesondere eine Hubhöhe, des Heck-Krafthebers 20.

Je nach Ausführungsform kann auf einzelne der genannten Sensormittel verzichtet werden oder diese können durch andere Sensormittel ersetzt sein, so dass sich unterschiedliche Anordnungen mit einer unterschiedlichen Kombination von Sensormitteln ergeben können, um Informationen bezüglich der Kraftheber 20, 21 und/oder der Anbauvorrichtungen 22, 23 zu erfassen.

Weiterhin ist am Arbeitsfahrzeug 10 ein Steuergerät 66 angeordnet, welches u.a. die Sensordaten des Front-Krafthebers 21 und/oder des Heck-Krafthebers 22 verarbeiten kann und mit einem elektronischen Bus (z.B. CAN-Bus) des Arbeitsfahrzeugs 10 verbunden sein kann. Außerdem kann an einer Anbauvorrichtung (in Fig. 1: das Anbaugewicht 23) eine RFID-Einheit 68 (z.B. Transponder) mit einer RFID-Kennnummer KN angeordnet sein. Ein am Arbeitsfahrzeug 10 angeordnetes RFID-Lesegerät 70 erfasst die Daten bzw. die RFID-Kennnummer KN der RFID-Einheit 68. In einer weiteren Ausführungsform kann auch die heckseitige Anbauvorrichtung 20 eine RFID-Einheit aufweisen, welche mit einem entsprechenden RFID-Lesegerät korrespondiert.

Das Arbeitsfahrzeug 10 verfügt außerdem über eine Empfangsantenne 72 zum Empfang der Signale von Satelliten eines Positionsbestimmungssystems (z.B. GPS, Galileo, Glonass) und über ein Steuergerät 74 als Bestandteil einer Telematik-Einheit 76 des Arbeitsfahrzeugs 10. Die Telematik-Einheit 76 ist mit einer Mobilfunkantenne 78 verbunden, welche zum Zwecke eines Datentransfers mit einer Mobilfunkantenne 80 einer bezüglich des Arbeitsfahrzeugs 10 externen Datenzentrale 82 (z.B. Server-Station oder dergleichen im landwirtschaftlichen Betrieb oder beim Fahrzeughersteller) kommuniziert.

In üblicher Weise weist die Kabine 18 auch eine Bedien- und Anzeigeeinheit 84 für den Bediener bzw. Fahrer des Arbeitsfahrzeugs 10 auf. Die Bedien- und Anzeigeeinheit 84 ist als Bedienerschnittstelle wirksam und dementsprechend beispielsweise an einen elektronischen Bus (z.B. CAN) des Arbeitsfahrzeugs 10 angeschlossen.

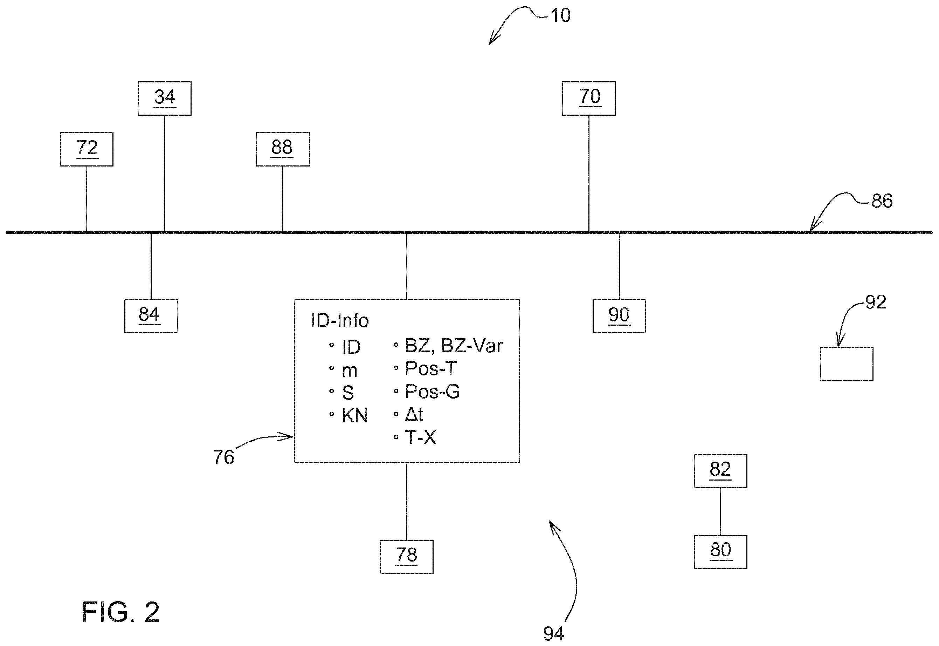

In Fig. 2 sind blockschaltbildartig einzelne Komponenten des Arbeitsfahrzeugs 10 dargestellt, welche für eine Erfassung und Dokumentation des Betriebs des Anbaugerätes 22 und/oder des Anbaugewichtes 23 wesentlich sind. Die einzelnen Komponenten sind im Wesentlichen bereits anhand von Fig. 1 genannt und erläutert. Sie sind an einen elektronischen Fahrzeugbus 86 (z.B. CAN-Bus) angeschlossen.

Die Telematik-Einheit 76 ist als eine Einrichtung zur Erfassung und/oder Dokumentation des Betriebs einer Anbauvorrichtung - beispielsweise des mit dem Arbeitsfahrzeug 10 gekoppelten Anbaugerätes 22 und/oder des mit dem Arbeitsfahrzeug 10 gekoppelten Anbaugewichtes 23 - wirksam. Hierbei ist die Telematik-Einheit 76 derart programmiert, dass der jeweiligen Anbauvorrichtung 22, 23 bei einer erstmaligen Kopplung an das Arbeitsfahrzeug 10 eine Identifikations-Kodierung ID als Bestandteil einer Identifikations-Information ID-Info zugeordnet wird. Ganz allgemein kann die Identifikations-Information ID-Info für jede Anbauvorrichtung mehrere charakteristische Detail-Daten beinhalten, um die einzelnen Anbauvorrichtungen beispielsweise auf einem landwirtschaftlichen Betrieb oder einem Fuhrpark zu unterscheiden und übersichtlich zu dokumentieren.

Als weiteren charakteristischen Parameter der Anbauvorrichtung 22, 23 beinhaltet die Identifikations-Information ID-Info deren Masse m. Die Masse m kann in bekannter Weise über die Daten des jeweiligen Krafthebers 20, 21 und der zugeordneten Sensormittel ermittelt und in einem entsprechenden Steuergerät 88 (für die Kraftheber-Waage des Heck-Krafthebers 20) bzw. Steuergerät 90 (für die Kraftheber-Waage des Front-Krafthebers 21) bereitgestellt werden. Die Telematik-Einheit 76 kann dann auf die Daten der Masse m zugreifen.

Als weiteren charakteristischen Parameter erfasst die Telematik-Einheit 76 einen Masse-Schwerpunkt S der jeweiligen Anbauvorrichtung 22, 23 relativ zu einem definierten Bezugspunkt an der Tragstruktur 12. Diese Daten können ebenfalls in bekannter Weise ermittelt und in den Steuergeräten 88, 90 bereitgestellt werden. Weiterhin kann die Telematik-Einheit 76 über das RFID-Lesegerät 70 auf die RFID-Kennnummer KN der RFID-Einheit 68 zugreifen und diese Daten der Identifikations-Information ID-Info der jeweiligen Anbauvorrichtung hinzufügen.

Außerdem beinhaltet die Identifikations-Information ID-Info mehrere Betriebsparameter der zu erfassenden Anbauvorrichtung 22, 23. Als Betriebsparameter sind in dem Ausführungsbeispiel vorgesehen:
- ein Betriebszustand BZ zur Unterscheidung, ob die Anbauvorrichtung an dem Kraftheber gekoppelt und angehoben ist oder von dem Kraftheber entkoppelt und abgestellt ist,
- eine Zustandsvariante BZ-Var in dem Betriebszustand BZ = "Angehoben" zur Unterscheidung, ob sich die Anbauvorrichtung im Stillstand, in Transportfahrt oder im Feldeinsatz befindet,
- eine Position Pos-G,
- eine Anbauposition Pos-T zur Unterscheidung, ob die Anbauvorrichtung heckseitig oder frontseitig am Arbeitsfahrzeug 10 gekoppelt ist,
- eine Nutzungsdauer Δt der Anbauvorrichtung in verschiedenen Betriebszuständen,
- eine Fahrzeug-Information T-X zur Erfassung, mit welchem Arbeitsfahrzeug 10 die Anbauvorrichtung aktuell gekoppelt ist und/oder in der Vergangenheit gekoppelt war.

Der Betriebszustand BZ kann über die Daten der Steuergeräte 88, 90 erfasst werden, da dort die Zustandsdaten der Kraftheber 20, 21 bereitgestellt werden. Die Zustandsvariante BZ-Var wird über eine Zustandsklassifizierung des Arbeitsfahrzeugs 10 in der Telematik-Einheit 76 erfasst. Die Position Pos-G wird als eine aktuelle Position des Arbeitsfahrzeugs 10 mittels der Empfangsantenne 72 erfasst. Die Anbauposition Pos-T kann wiederum über die Daten der Steuergeräte 88, 90 erfasst werden. Die Nutzungsdauer Δt wird von einer am Fahrzeugbus 86 oder in der Telematik-Einheit 76 bereitgestellten Zeitdauer der Kraftheber 20, 21 und des Arbeitsfahrzeugs 10 in bestimmten Betriebszuständen abgeleitet. Die Fahrzeug-Information T-X kann von der Telematik-Einheit 76 und/oder von der externen Datenzentrale 82 generiert oder aktualisiert werden.

Die in der Telematik-Einheit 76 eines Arbeitsfahrzeugs 10 generierte Identifikations-Information ID-Info kann als die gekoppelte Anbauvorrichtung 22 bzw. 23 repräsentierender Datensatz über die Mobilfunkantenne 78 an die externe Datenzentrale 82 gesendet und dort zur Dokumentation gespeichert werden. Einzelne Daten der Identifikations-Information ID-Info können abhängig von veränderten Zuständen der Anbauvorrichtung 22, 23 in der Telematik-Einheit 76 aktualisiert und von dort wieder an die externe Datenzentrale 82 gesendet werden.

Wird eine am Arbeitsfahrzeug 10 gekoppelte Anbauvorrichtung 22, 23 entkoppelt und an einer Abstellposition abgestellt, so entspricht diese Abstellposition einer aktuellen Position Pos-G des Arbeitsfahrzeugs 10. Diese Position Pos-G wird als aktueller Stellplatz der Anbauvorrichtung 22, 23 in der Telematik-Einheit 76 erfasst und zur Dokumentation an die Datenzentrale 82 gesendet. Ein berechtigter Nutzer (z.B. Betriebsleiter eines landwirtschaftlichen Betriebs oder Fahrer anderer Arbeitsfahrzeuge) kann über ein geeignetes Endgerät 92 (z.B. Smartphone, Laptop, Tablet) auf die Dokumentation in der Datenzentrale 82 zugreifen und sich den Standort Pos-G dieser Anbauvorrichtung anzeigen lassen. Hierdurch ist ein System 94 aufgebaut, welches für sämtliche berechtigte Nutzer eine eindeutige Dokumentation und Übersicht über alle vorhandenen Anbauvorrichtungen bereitstellt. Über die vorgenannten Betriebsparameter der Anbauvorrichtungen 22, 23 kann beispielsweise geprüft werden, ob die Arbeitsfahrzeuge 10 für ihren jeweiligen Arbeitseinsatz mit der jeweils passendsten Anbauvorrichtung gekoppelt sind, insbesondere mit einem Anbaugewicht 23 passend ballastiert sind.

Zusammengefasst ist es mit dem geschilderten Verfahren, der Telematik-Einheit 76 sowie dem System 94 auf kostengünstige Weise mit geringem technischen Aufwand möglich, Positionen und Betriebszustände von Anbauvorrichtungen zu erfassen, zu kommunizieren und zu dokumentieren, welche nicht selbst mit elektronischen Komponenten zur Erfassung ihrer Positionen und Betriebszustände ausgerüstet sind.

## Patentansprüche

1. Verfahren zur Erfassung und/oder Dokumentation des Betriebs einer mit einem Arbeitsfahrzeug (10) koppelbaren Anbauvorrichtung (22, 23), bei dem bei einer jeweiligen Anbauvorrichtung (22, 23) von einer Telematik-Einheit (76) des Arbeitsfahrzeugs (10) bei einer erstmaligen Kopplung der Anbauvorrichtung (22, 23) eine Identifikations-Kodierung (ID) als Bestandteil einer in der Telematik-Einheit (76) generierten und an eine externe Datenzentrale (82) gesendeten Identifikations-Information (ID-Info) zugeordnet wird, wobei die Identifikations-Kodierung (ID) für jede an das Arbeitsfahrzeug (10) gekoppelte Anbauvorrichtung (22, 23) unterschiedlich ist, und wobei von der Telematik-Einheit (76) beim Entkoppeln der Anbauvorrichtung (22, 23) ein von der Identifikations-Information (ID-Info) beinhalteter, die Anbauvorrichtung (22, 23) repräsentierender Betriebsparameter in Gestalt einer aus einer aktuellen Position (Pos-G) des Arbeitsfahrzeugs (10) abgeleiteten Position (Pos-G) der Anbauvorrichtung (22, 23) als aktueller Stellplatz der Anbauvorrichtung (22, 23) erfasst und die sich daraus ergebende Identifikations-Information (ID-Info) über eine mit der Telematik-Einheit (76) verbundene Mobilfunkantenne (78) zur Dokumentation an die externe Datenzentrale (82) gesendet wird.

2. Verfahren nach Anspruch 1, **dadurch gekennzeichnet, dass** die Identifikations-Information (ID-Info) eine Masse (m) der Anbauvorrichtung (22, 23) beinhaltet, welche mittels einer als Kraftheber-Waage wirksamen Anordnung (20, 21) des Arbeitsfahrzeugs (10) ermittelt wird.

3. Verfahren nach Anspruch 1 oder 2, **dadurch gekennzeichnet, dass** die Identifikations-Information (ID-Info) eine Kennung (KN) einer an der Anbauvorrichtung (23) angeordneten RFID-Einheit (68) beinhaltet.

4. Verfahren nach einem der vorhergehenden Ansprüche, **dadurch gekennzeichnet, dass** die Identifikations-Information (ID-Info) mindestens einen weiteren die Anbauvorrichtung (22, 23) repräsentierenden Betriebsparameter (BZ, Pos-T, Δt, T-X) beinhaltet.

5. Verfahren nach Anspruch 4, **dadurch gekennzeichnet, dass** der mindestens eine weitere Betriebsparameter einen Betriebszustand (BZ) der Anbauvorrichtung (22, 23) umfasst, wobei mindestens folgende mögliche Betriebszustände (BZ) vorgesehen sind:
- "Angehoben" für einen mit dem Arbeitsfahrzeug (10) gekoppelten Zustand, und
- "Abgestellt" für einen nicht-gekoppelten Zustand der Anbauvorrichtung (22, 23).

6. Verfahren nach Anspruch 5, **dadurch gekennzeichnet, dass** dem Betriebszustand (BZ) "Angehoben" eine Zustandsvariante (BZ-Var) zugeordnet wird, welche als eine Zustandsklassifizierung des Arbeitsfahrzeugs (10) ermittelt wird, wobei die Zustandsklassifizierung mindestens folgende mögliche Zustände aufweist: "im Stillstand", "in Transportfahrt", "im Feldeinsatz".

7. Verfahren nach einem der Ansprüche 4 bis 6, **dadurch gekennzeichnet, dass** der mindestens eine weitere Betriebsparameter eine am Arbeitsfahrzeug (10) gekoppelte Anbauposition (Pos-T) der Anbauvorrichtung (22, 23) umfasst, wobei die Anbauposition (Pos-T) mittels einer als Kraftheber-Waage wirksamen Anordnung (20, 21) des Arbeitsfahrzeugs (10) ermittelt wird.

8. Verfahren nach einem der Ansprüche 4 bis 7, **dadurch gekennzeichnet, dass** der mindestens eine weitere Betriebsparameter eine Fahrzeug-Information (T-X) umfasst, welche
- das Arbeitsfahrzeug (10) repräsentiert, mit dem die Anbauvorrichtung (22, 23) aktuell gekoppelt ist, und/oder
- mindestens ein Arbeitsfahrzeug repräsentiert, mit dem die Anbauvorrichtung (22, 23) in der Vergangenheit gekoppelt war.

## Claims

1. Method for detecting and/or documenting the operation of an attachment device (22, 23) which can be coupled to a work vehicle (10), in which, in the case of a respective attachment device (22, 23), a telematics unit (76) of the work vehicle (10) assigns an identification code (ID), as a component of identification information (ID info) generated in the telematics unit (76) and sent to an external data centre (82), when the attachment device (22, 23) is coupled for the first time, wherein the identification code (ID) is different for each attachment device (22, 23) coupled to the work vehicle (10), and wherein, when the attachment device (22, 23) is decoupled, the telematics unit (76) detects an operating parameter contained in the identification information (ID info) and representing the attachment device (22, 23), in the form of a position (Pos-G) of the attachment device (22, 23) derived from a current position (Pos-G) of the work vehicle (10), as the current parking position of the attachment device (22, 23), and the resulting identification information (ID info) is sent to the external data centre (82) for documentation via a mobile radio antenna (78) connected to the telematics unit (76).

2. Method according to Claim 1, **characterized in that** the identification information (ID info) comprises a mass (m) of the attachment device (22, 23), which is determined by means of an arrangement (20, 21) of the work vehicle (10) acting as a power lift balance.

3. Method according to Claim 1 or 2, **characterized in that** the identification information (ID info) comprises an identifier (KN) of an RFID unit (68) arranged on the attachment device (23).

4. Method according to one of the preceding claims, **characterized in that** the identification information (ID info) comprises at least one further operating parameter (BZ, Pos-T, Δt, T-X) representing the attachment device (22, 23).

5. Method according to Claim 4, **characterized in that** the at least one further operating parameter comprises an operating state (BZ) of the attachment device (22, 23), wherein at least the following possible operating states (BZ) are provided:
- "Raised" for a state coupled to the work vehicle (10), and
- "Parked" for a non-coupled state of the attachment device (22, 23).

6. Method according to Claim 5, **characterized in that** the operating state (BZ) "raised" is assigned a state variant (BZ-Var) which is determined as a state classification of the work vehicle (10), wherein the state classification has at least the following possible states: "at a standstill", "in transport", "in field use".

7. Method according to one of Claims 4 to 6, **characterized in that** the at least one further operating parameter comprises an attachment position (Pos-T) of the attachment device (22, 23) coupled to the work vehicle (10), wherein the attachment position (Pos-T) is determined by means of an arrangement (20, 21) of the work vehicle (10) acting as a power lift balance.

8. Method according to one of Claims 4 to 7, **characterized in that** the at least one further operating parameter comprises vehicle information (T-X) which
- represents the work vehicle (10) to which the attachment device (22, 23) is currently coupled, and/or
- represents at least one work vehicle to which the attachment device (22, 23) was coupled in the past.

## Revendications

1. Procédé de détection et/ou de documentation du fonctionnement d'un dispositif de montage (22, 23) pouvant être accouplé à un véhicule de travail (10), dans lequel, pour un dispositif de montage (22, 23) respectif, un codage d'identification (ID) est attribué par une unité télématique (76) du véhicule de travail (10) lors d'un premier accouplement du dispositif de montage (22, 23) en tant que partie intégrante d'une information d'identification (ID-Info) générée dans l'unité télématique (76) et envoyée à une centrale de données externe (82), le codage d'identification (ID) étant différent pour chaque dispositif de montage (22, 23) accouplé au véhicule de travail (10), et dans lequel, lors du désaccouplement du dispositif de montage (22, 23), un paramètre de fonctionnement contenu dans l'information d'identification (ID-Info) et représentant le dispositif de montage (22, 23) sous la forme d'une position (Pos-G) du dispositif de montage (22, 23) déduite d'une position actuelle (Pos-G) du véhicule de travail (10) en tant qu'emplacement actuel du dispositif de montage (22, 23) est détecté par l'unité télématique (76), et l'information d'identification (ID-Info) qui en résulte est envoyée pour documentation à la centrale de données externe (82) par l'intermédiaire d'une antenne de téléphonie mobile (78) connectée à l'unité télématique (76).

2. Procédé selon la revendication 1, **caractérisé en ce que** l'information d'identification (ID-Info) comprend une masse (m) du dispositif de montage (22, 23), qui est déterminée au moyen d'un dispositif (20, 21) du véhicule de travail (10) agissant comme une balance de relevage hydraulique.

3. Procédé selon la revendication 1 ou 2, **caractérisé en ce que** l'information d'identification (ID-Info) comprend un identifiant (KN) d'une unité RFID (68) disposée sur le dispositif de montage (23).

4. Procédé selon l'une quelconque des revendications précédentes, **caractérisé en ce que** l'information d'identification (ID-Info) comprend au moins un autre paramètre de fonctionnement (BZ, Pos-T, Δt, T-X) représentant le dispositif de montage (22, 23).

5. Procédé selon la revendication 4, **caractérisé en ce que** l'au moins un autre paramètre de fonctionnement comprend un état de fonctionnement (BZ) du dispositif de montage (22, 23), au moins les états de fonctionnement (BZ) possibles suivants étant prévus :
- "Levé" pour un état accouplé au véhicule de travail (10), et
- "Posé" pour un état non accouplé du dispositif de montage (22, 23).

6. Procédé selon la revendication 5, **caractérisé en ce qu'**une variante d'état (BZ-Var) est attribuée à l'état de fonctionnement (BZ) "Levé" et est déterminée comme étant une classification d'état du véhicule de travail (10), la classification d'état présentant au moins les états possibles suivants : "à l'arrêt", "en déplacement de transport", "en travail aux champs".

7. Procédé selon l'une quelconque des revendications 4 à 6, **caractérisé en ce que** l'au moins un autre paramètre de fonctionnement comprend une position de montage (Pos-T) du dispositif de montage (22, 23) accouplé au véhicule de travail (10), la position de montage (Pos-T) étant déterminée au moyen d'un dispositif (20, 21) du véhicule de travail (10) agissant comme une balance de relevage hydraulique.

8. Procédé selon l'une quelconque des revendications 4 à 7, **caractérisé en ce que** l'au moins un autre paramètre de fonctionnement comprend une information de véhicule (T-X) qui
- représente le véhicule de travail (10) auquel le dispositif de montage (22, 23) est actuellement accouplé, et/ou
- représente au moins un véhicule de travail auquel le dispositif de montage (22, 23) était antérieurement accouplé.
